Europäisches Patentamt

European Patent Office

Office européen des brevets

(11) Publication number: **0 251 498**
A2

## (12) EUROPEAN PATENT APPLICATION

(21) Application number: 87304846.6

(22) Date of filing: 02.06.87

(51) Int. Cl.³: **G 01 S 13/90**
G 01 S 13/28, G 01 S 13/22
G 01 S 7/28

(30) Priority: 21.06.86 GB 8615204

(43) Date of publication of application:
07.01.88 Bulletin 88/1

(84) Designated Contracting States:
DE FR GB IT NL SE

(71) Applicant: THORN EMI Electronics Limited
Blyth Road
Hayes Middlesex UB3 1DL(GB)

(72) Inventor: Morphet, Frank Neal
1, Sandalwood Avenue
Chertsey, KT16 9PD(GB)

(72) Inventor: Payne, Robert William
72, Leas Drive Iver
Buckinghamshire, SL0 9RD(GB)

(74) Representative: Fleming, Ian Alexander et al,
THORN EMI Patents Limited The Quadrangle Westmount
Centre Uxbridge Road
Hayes Middlesex, UB4 0HB(GB)

(54) Radar.

(57) A synthetic aperture radar has a coherent oscillator 1 gated by timing circuits 3 to produce output pulses expanded by the surface acoustic wave (SAW) expander 5 to form chirp pulses. Once converted up to r.f. and amplified, the pulses are fed to the antenna 10 via the circulator 11. The return signals are received at the antenna 10, converted down to i.f. and compressed then compared with the coherent oscillator 1 output in phase sensitive detector 17. Pulses within each burst are doppler frequency analysed by the FFT processor 23. The pulses within any burst have a constant p.r.f., but the p.r.f. may be changed between successive bursts to remove ambiguities and to recover blind velocities.

FIG.3

EP 0 251 498 A2

Croydon Printing Company Ltd.

# RADAR

This invention relates to synthetic aperture radars (SAR'S).

The purpose of reconnaissance systems is to provide, in real time, as much information as possible regarding the deployment and activites of potentially hostile forces. The use of SAR techniques to provide high-quality mapping of static targets, even at long range, assists in the evaluation of patterns of deployment. However, SAR does not in general give good performance with moving targets, thereby limiting the use of such a radar in determining the pattern of activity.

Moving Target Detection (MTD) radars can be designed to give good detection capability against background clutter, hence giving indication of activity, but they do not give high-quality pictures of the static background scenario. Therefore there is often difficulty in rapidly relating the pattern of activity to the overall deployment of forces and reinforcements.

Some attempts have been made to use a single radar to provide both functions simultaneously, such as that described in B.P.1459444. However, such techniques are complicated or costly.

An object of the present invention is to provide a synthetic aperture radar in which the above disadvantages are alleviated.

Accordingly, the present invention provides a synthetic aperture radar comprising: a transmitter having means to provide bursts of pulses, in which all the pulses are coherently modulated and the time intervals between pulses and between bursts are independently controlled; a coherent receiver with processing means to process the returns from said bursts of pulses so as to provide moving target information and mapping of static targets simultaneously.

In a preferred embodiment, the radar comprises means to control the time intervals between successive pulses within successive bursts so as to enable the receiver to provide moving target information and means to control the time intervals between successive bursts of pulses so as to enable the receiver to provide data suitable for mapping static targets. This enables the position of moving targets to be readily superimposed on the map of static targets, which greatly assists in interpreting the available information.

The requirements for synthetic aperture processing over each sampling interval are that the modulation of frequency should be fixed, coherent and pulsed at uniform spatial intervals $S=VT$, where $V$ is the velocity of the radar platform and $T$ the time interval. The sampling rate may be relatively low, allowing time for information processing and elimination of range ambiguities.

The requirements for moving target detection over each sampling interval are that the modulation frequency should be fixed, coherent and pulsed at uniform time intervals. It is necessary to use either more than one modulation frequency, or more than one value of time interval between successive pulses in successive sampling intervals in order to remove ambiguities and blind velocities. The sampling rate should be relatively high to minimise blind velocities, which occur when the doppler frequency is a multiple of the sampling frequency.

The inventors have now appreciated that both these requirements can be met in a radar in which the time-intervals between successive pulses within a burst and between successive bursts of pulses are independently controlled.

The present invention also provides a transmitter for use in a synthetic aperture radar, the transmitter comprising means to provide bursts of pulses, in which all the pulses are coherently modulated and the time intervals between pulses and between bursts are independently controlled.

Furthermore, the present invention also provides a receiver for use in a synthetic aperture radar, the receiver having processing means to process return signals formed of bursts of coherently modulated pulses with the time intervals between pulses and between bursts being different and changeable, thereby to provide moving target information and mapping of static targets simultaneously.

In order that the invention may more readily be understood, a description is now given by way of example only, reference being made to the accompanying drawings, in which:

Figure 1 shows a pulse sequence suitable for carrying out the invention;

Figure 2 shows a transmitter/receiver arrangement according to the invention;

Figure 3 shows a processing arrangement according to the invention; and

Figure 4 shows the SAR processor in more detail.

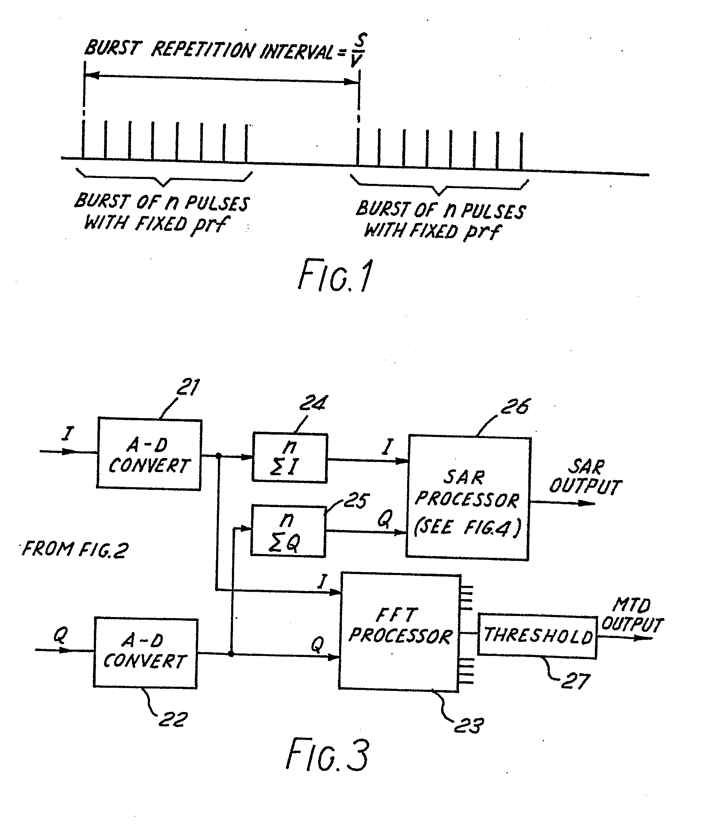

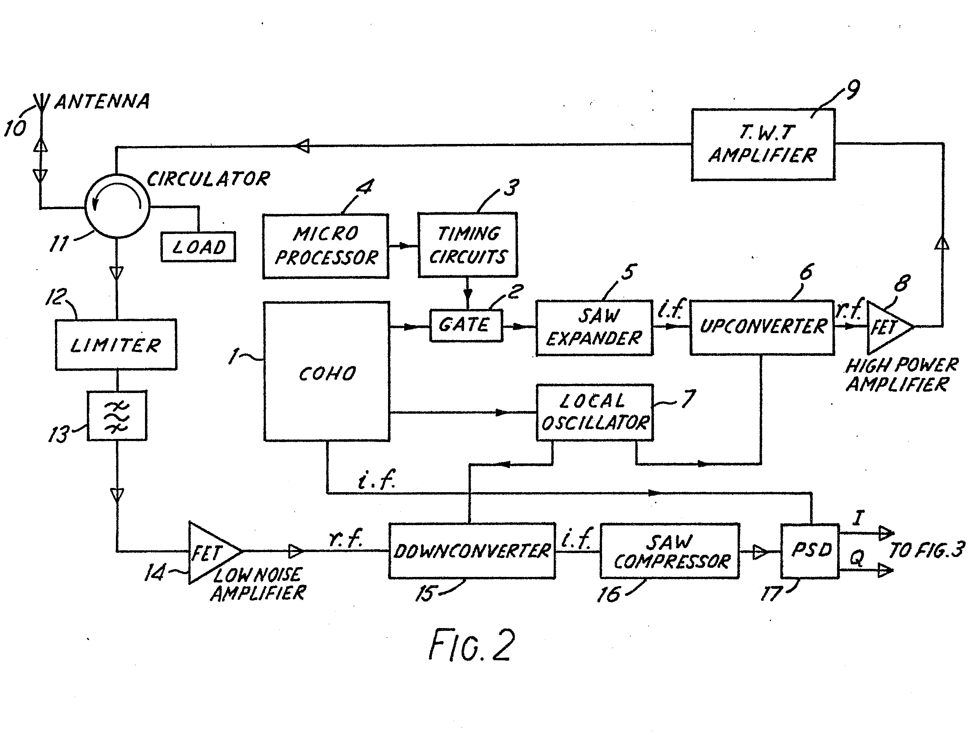

The required pulse sequence is shown in Figure 1. The pulses within a burst have a constant pulse repetition frequency (p.r.f) but this may be changed between bursts. The repetition interval between bursts is S/V, S being the uniform spatial interval and T the time.

Means for generating the pulse sequence are shown in the transmitter/receiver arrangement of Figure 2. One output of the coherent oscillator 1 is gated at 2 by timing circuits 3 under the control of microprocesser 4. The output pulses from the gate 2 are each expanded by the surface acoustic wave (SAW) expander 5 to form chirp pulses. The frequency is converted up to r.f. at the mixer 6 by the local oscillator 7. The pulses are then amplified by the FET high power amplifier 8 and travelling wave tube amplifier 9, and fed to the antenna 10 via the circulator 11. The return signals are received at the antenna 10 and fed via the circulator 11, limiter 12 (which protects the receiver), and low-noise amplifier 14 to the mixer 15, where the frequency is converted down to i.f. The i.f. pulses are then compressed by the SAW compressor 16. The signal is then compared with the output from the coherent oscillator 1 (without and with a $90^0$ phase shift) in the phase sensitive detector 17

0251498

to provide output I and Q signals in phase and $90^0$ out of phase with the coherent oscillator 1.

The processing of the I and Q signals produced by the phase sensitive detector 17 is shown in Figure 3. After A/D conversion at 21 and 22 respectively both the I and Q signals are fed directly to a fast Fourier transform (FFT) processor 23 and via respective summation circuits 24 and 25 to the SAR processor 26.

The pulses within each burst are processed by the FFT processor 23 which provides a doppler frequency analysis representing a velocity analysis of the moving targets. The outputs at the lower doppler frequencies are rejected, to eliminate clutter. The other outputs each pass through a respective threshold circuit 27. The requirement for the FFT processing is that the pulses within any burst must have a constant p.r.f., but the p.r.f. may be changed between successive bursts to remove ambiguities and to recover blind velocities.

For the SAR processing, the I and Q signals within each burst of pulses are presummed at 24 and 25 respectively, the summed signals being applied to the SAR processor 26. Equal spatial intervals are required between the summed signals and therefore between the bursts of pulses. Hence the burst repetition frequency is varied according to the velocity of the radar platform.

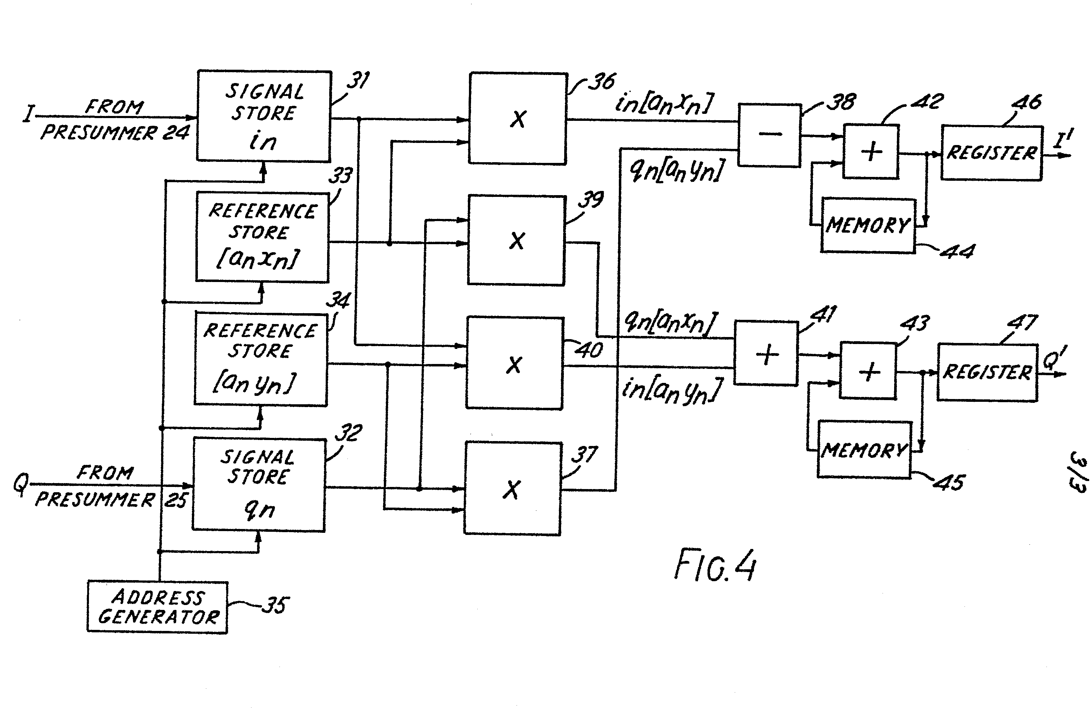

The SAR processor 26 is shown in greater detail in Figure 4. The n values of I and Q signals for each range cell are stored in the signal stores 31, 32. When forming each synthetic aperture, the n samples are convolved with a reference function by performing a series of vector rotations and summing the processed real and imaginary results ($I'_n$ and $Q'_n$).

If the signal vector is represented as ($i_n + jq_n$) and the reference vector is represented as $a_n (x_n + jy_n)$, where $a_n$ is a weighting coefficient, then the processed signal is given by

$$\sum^{n} (i_n + jq_n) \, a_n \, (x_n + jy_n)$$

On expanding the expression the processed real component is given by:

$$I' = \sum^{n} (i_n \lfloor \overline{a}_n x_n \rfloor - q_n \lfloor \overline{a}_n y_n \rfloor) \quad ...(1)$$

and the imaginary component by:

$$Q' = \sum^{n} (i_n \lfloor \overline{a}_n y_n \rfloor + q_n \lfloor \overline{a}_n x_n \rfloor) \quad ...(2)$$

For convenience, the terms in square brackets, relating to the reference function are stored in reference stores 33, 34 as $\lfloor \overline{a}_n x_n \rfloor$ and $\lfloor \overline{a}_n y_n \rfloor$ and not as individual components. Both the signal stores 31, 32 and the reference stores 33, 34 are operated in conjunction with the address generator 35.

The multipliers 36, 37 form the appropriate products for the real component I (equation 1) and these products are subtracted at 38. Similarly, the multipliers 39, 40 form the appropriate products for the imaginary component Q (equation 2) and these products are added at 41. The outputs from 38 and 41 are fed to respective adders 42, 43, whose outputs are fed back to the second inputs of the adders via registers 44, 45 so that the n successive returns within the synthetic aperture can be added for each range cell. When all n values have been added (for each range cell), the results are clocked into respective second registers 46, 47. The presumming circuits 24, 25 (Figure 3) operate in a similar manner. However, the small effect of the vector rotation within the small time period has been ignored for this summation.

In essence, the signals into the SAR processor 26 are successive samples of rotating vectors representative of targets as they pass through the real aerial beam. The rate of rotation depends on the position of the target within the beam. The function of the SAR processor is to de-rotate the vectors, so that the individual components all point in the same direction and hence give the maximum possible integration gain when added together. The reference function gives the correct values of coefficients to derotate the vectors from a specific area or target position on the ground. Vectors from other areas within the real aerial beam then add destructively, leaving a highly resolved image of the required target.

The final stage of processing (not shown in Figure 4) is to obtain the modulus or amplitude of the processed vectors for each range cell. Ideally this would be:

Modulus $= \sqrt{(I')^2 + (Q')^2}$

In practice, in order to avoid having to obtain the square root, an approximation to this is used, usually:

Modulus = Greater of $\left| I' \right| + \left| \dfrac{Q'}{2} \right|$ + or $\left| Q' \right| + \left| \dfrac{I'}{2} \right|$,

where $\left| I' \right|$ or $\left| Q' \right|$ is the numerical value of I' or Q', disregarding whether they are positive or negative in sign.

0251498

## CLAIMS

1. A synthetic aperture radar comprising: a transmitter having means to provide bursts of pulses, in which all the pulses are coherently modulated and the time intervals between pulses and between bursts are independently controlled; a coherent receiver with processing means to process the returns from said bursts of pulses so as to provide moving target information and mapping of static targets simultaneously.

2. A radar according to Claim 1, comprising means to control the time intervals between successive pulses within successive bursts so as to enable the receiver to provide moving target information.

3. A radar according to Claim 1 or Claim 2, comprising means to control the time intervals between successive bursts of pulses so as to enable the receiver to provide data suitable for mapping static targets.

4. A transmitter for use in a synthetic aperture radar, the transmitter comprising means to provide bursts of pulses, in which all the pulses are coherently modulated and the time intervals between pulses and between bursts are independently controlled.

5. A receiver for use in a synthetic aperture radar, the receiver having processing means to process return signals formed of bursts of coherently modulated pulses with the time intervals between pulses and between bursts being different and changeable, thereby to provide moving target information and mapping of static targets simultaneously.

BURST REPETITION INTERVAL = $\frac{S}{V}$

BURST OF $n$ PULSES
WITH FIXED prf

BURST OF $n$ PULSES
WITH FIXED prf

Fig.1

```
        21                24                      26
  I   ┌────────┐        ┌──────┐      I    ┌──────────┐
 ───▶ │  A-D   │───●───▶│  n   │──────────▶│   SAR    │──▶  SAR
      │CONVERT │   │    │ ΣI   │           │PROCESSOR │    OUTPUT
      └────────┘   │    └──────┘           │(SEE FIG.4)│
                   │                    Q  │          │
FROM FIG.2         │    ┌──────┐25  ──────▶│          │
                   │    │  n   │           └──────────┘
                   │    │ ΣQ   │
                   │    └──────┘
                   │                  I   ┌──────────┐
                   │              ──────▶ │   FFT    │    ┌──────────┐   MTD
  Q   ┌────────┐   │                      │PROCESSOR │───▶│THRESHOLD │──▶OUTPUT
 ───▶ │  A-D   │───●──────────────────▶   │          │    └──────────┘
      │CONVERT │              Q           └──────────┘        27
      └────────┘                              23
         22
```

Fig.3

FIG.2

FIG.4